(19) Europäisches Patentamt
European Patent Office
Office européen des brevets

(11) Publication number: **0 304 701 B1**

(12) # EUROPEAN PATENT SPECIFICATION

(45) Date of publication of patent specification: **07.12.94**

(51) Int. Cl.[5]: **C08G 77/38**, C08L 83/04, C08G 77/18, C08K 5/57, C08K 5/54

(21) Application number: **88112763.3**

(22) Date of filing: **05.08.88**

(54) **Polyalkoxysilyl-terminated polydiorganosiloxanes, methods for their preparation, and room temperature vulcanizable compositions containing them.**

(30) Priority: **27.08.87 US 90183**

(43) Date of publication of application:
**01.03.89 Bulletin 89/09**

(45) Publication of the grant of the patent:
**07.12.94 Bulletin 94/49**

(84) Designated Contracting States:
**DE ES FR GB IT NL SE**

(56) References cited:
**EP-A- 0 069 256**
**EP-A- 0 210 402**
**US-A- 4 517 337**
**US-A- 4 528 324**

(73) Proprietor: **GENERAL ELECTRIC COMPANY**
**1 River Road**
**Schenectady New York 12305 (US)**

(72) Inventor: **Wengrovious, Jeffrey Hayward**
**822 Charles Street**
**Scotia New York 12302 (US)**
Inventor: **Hallgren, John Edward**
**12 Wagon Wheel**
**Scotia New York 12302 (US)**
Inventor: **Stein, Judith**
**100 Union Street**
**Schenectady New York 12301 (US)**
Inventor: **Lucas, Gary Morgan**
**21 St. Anthony Lane**
**Scotia New York 12302 (US)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

**EP 0 304 701 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to polydiorganosiloxane compositions and methods for their preparation and use. More particularly, it relates to improved room temperature vulcanizable compositions employing a novel class of polyalkoxy-terminated polydiorganosiloxanes.

Considerable attention has been directed in recent years to the development of improved one-package room temperature vulcanizable (hereinafter sometimes designated "RTV") compositions. Under ideal conditions, these compositions would be stable for an indefinite period when stored in the absence of moisture, and would promptly cure to a tack-free elastomer upon contact with moisture, including the relatively small proportions of water vapor present in the atmosphere.

US-A-4 528 324 describes a process for producing RTV silicone rubber compositions using a devolatilizing extruder.

EP-A-0 210 402 discloses a process for making a polyalkoxysilyl-terminated diorganopolysiloxane using an ammonium carbamate as a catalyst.

In a typical RTV composition, the predominant constituent is a polydiorganosiloxane (hereinafter sometimes designated "silicone" for brevity) containing polyalkoxysilyl end groups, typically dialkoxyalkylsilyl groups. These groups may be formed in situ by incorporating in the RTV composition a silanol-terminated silicone and, as an endcapping reagent, a polyalkoxysilyl compound such as methyltrimethoxysilane or dimethyltetramethoxydisilazane, which undergo reaction to produce the polyalkoxysilyl-terminated species. It is generally more efficient, however, to employ a previously formed polyalkoxysilyl-terminated silicone prepared by the same reaction.

In either case, the polyalkoxysilyl-terminated species is capable of being crosslinked by atmospheric moisture in the presence of a suitable metal-containing catalyst, usually an aluminum, titanium or tin compound. Disclosures of RTV compositions of this type are present in many patents and publications.

Early one-package RTV's employed silicones containing polyacyloxysilyl, typically polyacetoxysilyl, end groups. Upon curing, these materials release carboxylic acids such as acetic acid, which has a strong odor and whose presence is therefore undesirable. In later developments the acyloxy groups were replaced by alkoxy groups. However, it was found that compositions containing such alkoxy groups are converted to hydroxy-functional species as the composition is stored. Said hydroxy-functional species may react to produce by-products such as monoalkoxydialkylsilyl-terminated silicones, which are incapable of being crosslinked. They may also break down the silicone upon contact with the curing catalyst, and may inactivate the catalyst. The result is materials which cure slowly, if at all.

An improved class of RTV's containing polyalkoxysilyl-terminated silicones is disclosed in U.S. Patent 4,395,526. It employs a compound which serves as a scavenger for hydroxy groups, typically a silicon-nitrogen compound or an enoxysilane.

A further development in the RTV art is represented by U.S. Patent 4,515,932, which describes an improved method for endcapping silanol-terminated silicones to form polyalkoxysilyl-terminated silicones. In this method an acidic material is employed, optionally and often preferably in combination with an amine, as an endcapping catalyst. In Example 1 of that patent, a silanol-terminated silicone is capped by reaction with dimethyltetramethoxydisilazane in the presence of di-n-hexylamine and various acids including formic acid. The dimethyltetramethoxydisilazane functions under these conditions as both an endcapping reagent and a scavenger for hydroxy groups in the final RTV composition. However, the formic acid is disclosed as yielding a product which is endcapped to the extent of only 21%.

The presence of scavengers in the above-described compositions, while necessary, also causes-problems. One obvious problem is the cost of the scavenger; such compounds are not readily available and are relatively expensive to prepare. Another problem is the formation of compounds such as ammonia or acetone as by-products of the scavenging reaction. Ammonia has an unpleasant odor and can cause corrosion of equipment or substrates. Acetone undergoes various reactions which introduce colored impurities into the RTV composition.

A scavenger-free one-package RTV composition is disclosed in U.S. Patent 4,517,337. It employs a catalyst such as dibutyltin bis(acetylacetonate), which is stable in the presence of hydroxy species such as methanol and silanol-terminated silicones and may therefore be employed without scavengers. This is a significant advance in the RTV art.

A further problem, however, is encountered in endcapping operations which employ as a catalyst the combination of an acidic material and an amine. Such readily available acids as acetic acid, when used for this purpose, afford polyalkoxysilyl-terminated silicones with excellent viscosity and other properties for incorporation in RTV compositions. However, the viscosities of such silicones typically decrease substantially upon storage. For example, a typical silanol-terminated polydimethylsiloxane reacts with methyltrimethoxysilane in the presence of di-n-butylamine and acetic acid to produce an endcapped product which, upon accelerated aging in the absence of air at 100°C for 3 days, decreases in viscosity by 99%. Such viscosity loss over time may render an RTV composition difficult or impossible to use.

Viscosity loss of this type is typically inhibited by quenching the endcapping catalyst after the endcapping reaction has proceeded. Among the compounds known to be useful for benching are those disclosed hereinabove as scavengers; hexamethyldisilazane is typical. Inclusion of such compounds is a return to precisely the problems caused by scavengers: formation of by-products which may have an undesirable odor or may lead to color formation in the RTV.

It is also necessary in many circumstances to improve the adhesion of RTV's to various substrates. In particular, adhesion to metals such as aluminum and steel is often poor.

The present invention provides a novel class of polyalkoxysilyl-terminated silicones which are relatively stable in viscosity over prolonged storage periods. Also provided is a method for making such silicones which employs a highly effective catalyst, as well as shelf-stable one-package RTV's containing them, said RTV's being free of scavenging and benching compounds. Finally, there is provided a series of RTV's which incorporate effective adhesion promoters.

The invention is based in large part on the discovery of a class of compounds useful as endcapping catalysts which are converted under the conditions prevailing in the endcapping reaction mixture to products ineffective to decrease the viscosity of the polyalkoxysilyl-terminated silicone. These products are typically carboxylic acid amides and/or esters, and they are typically formed at temperatures as low as 20-25°C. It has been found, however, that such conversion is slow enough to enable said compounds to function efficiently as catalysts.

In one of its aspects, therefore, the present invention is a method for preparing a polyalkoxysilyl-terminated polydiorganosiloxane which comprises effecting reaction between the components of a mixture comprising at least one silanol-terminated polydiorganoslloxane and an amount effective for endcapping thereof of at least one polyalkoxysilane of the formula

(I) $(R^1)_aSi(OR^2)_{4-a}$ ,

wherein $R^1$ is an unsubstituted or substituted hydrocarbon radical containing from 1 to 13 carbon atoms, $R^2$ is an alkyl, alkoxyalkyl, acylalkyl, acyloxyalkyl or cyanoalkyl radical containing from 1 to 8 carbon atoms or an aralkyl radical containing from 7 to 14 carbon atoms, and a is 0 or 1; said reaction being conducted in the presence of a catalytic amount of an acidic amine salt which, when dissolved in water in substancially pure form, yields a solution with a pH below 7, said salt being capable of decomposing to substantially inert products, and enoxysilanes.

For the most part, the silanol-terminated polydiorganosiloxanes (silicones) used in the present invention have the formula

(II) 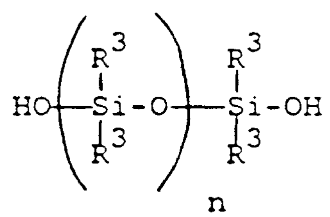 ,

wherein each $R^3$ is independently an unsubstituted or substituted hydrocarbon radical containing 1-13 carbon atoms and n is in the range of 5-5000. Illustrative $R^3$ radicals are methyl, ethyl, phenyl, trifluoropropyl and vinyl. Alkyl radicals having up to 4 carbon atoms and especially methyl radicals are preferred.

The polyalkoxysilane employed as an endcapping reagent is represented by formula I in which a is 0 or 1, most often 1. The $R^1$ radicals therein may be defined in the same terms as $R^3$ in formula II, with the same preferences. $R^2$ may be alkyl or the designated substituted alkyl radicals containing aryl, ethyl, ester, ketone or cyano substituents; it is also most often $C_{1-4}$ alkyl and especially methyl. Illustrative compounds of this type are methyltrimethoxysilane (which is usually preferred), methyltriethoxysilane, ethyltrimethoxysilane, tetraethoxysilane and vinyltrimethoxysilane.

An essential feature of the invention is the use as an endcapping catalyst of an acidic amine salt which subsequently decomposes to products which are substantially inert when contacted with polyalkoxysilyl-terminated silicones. By "acidic amine salt" is meant one which, when dissolved in water in substantially pure form, yields a solution with a pH below 7. The decomposition products are not themselves substantially acidic, since it has been found that acidic materials cause material viscosity decrease in such silicones when they remain in contact therewith. The products may, however, be functional derivatives of acids. Moreover, the acidic salts whose use is contemplated do not require contact with silicon-nitrogen compounds or enoxysilanes for inactivation, since an essential feature of the invention is the absence of the latter classes of materials.

A preferred class of acidic salts is the amine salts of formic acid. The identity of the amine is not critical but mono-, di- and trialkylamines are preferred, especially those in which the alkyl groups contain 3-8 carbon atoms and most especially dialkylamines. The most preferred amines are di-n-butylamine and diisobutylamine. For the most part, di-(sec-alkyl)amines such as diisobutylamine have less tendency than di-(n-alkyl)amines to cause yellowing of RTV's cured with tin complexes such as dibutyltin bis-(acetylacetonate).

The amine salt of formic acid may be previously prepared and incorporated in the reaction mixture, or it may be prepared in situ in said mixture by the addition of formic acid and a suitable amine. It is within the scope of the invention to employ an excess of either reagent, most often up to a molar ratio of about 15:1. It is frequently more advantageous to use the formic acid in excess than the amine, since it is converted to harmless alkyl formiate by reaction with the polyalkoxysilane, as described hereinafter. Excess amine sometimes causes color to develop in the product.

Another essential feature of the invention is the absence from the reaction mixture of silicon-nitrogen compounds and enoxysilanes. In other words, none of the common scavenging or quenching compounds are required.

The endcapping reaction may be conducted by merely heating the above-described reaction mixture to a temperature within the range of 50-100 °C for a suitable period of time, typically 0.5-2 hours, preferably with agitation. The use of diluents is within the scope of the invention but is seldom necessary or preferred.

The proportions of reagents employed in the method of this invention are not critical, but certain ranges of proportions are generally preferred. Most often, for each 100 parts by weight of silanol-terminated silicone there is employed 0.5-10.0 parts of polyalkoxysilane and 0.005-3.0 parts of acidic salt. When the catalyst is an amine salt of formic acid prepared in situ, the proportions of amine and formic acid per 100 parts of silicone are most often 0.001-1.0 part and 0.001-0.1 part, respectively. The formic acid may be employed in the form of a commercially available aqueous solution.

In general, stabilized product viscosities vary directly with reaction temperature and inversely with proportion of catalyst and endcapping reagent. For a high viscosity product, it is frequently preferred to employ temperatures in the range of 70-100 °C and catalyst and polyalkoxysilane levels in the range of 0.05-0.30 and 0.5-3.0 parts, respectively, per 100 parts of silanol-terminated silicone.

The degree of completion of the endcapping reaction can be determined by silicon-29 nuclear magnetic resonance spectroscopy. It can also be determined qualitatively by the "titanium coupling test", performed by adding a tetraalkyl titanate or zirconate. If a substantial proportion (i.e., greater than about 5%) of silanol-terminated silicone remains in the mixture, it reacts therewith to form a gel. Absence of gel formation indicates essentially complete reaction.

The polyalkoxysilyl-terminated silicones prepared by the method of this invention may be represented by the formula

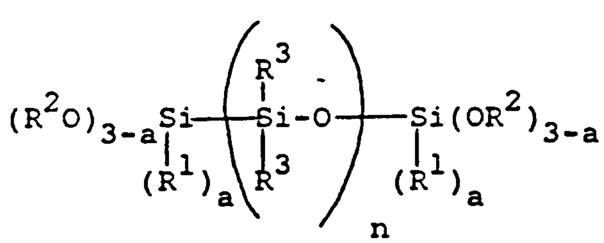

,

wherein $R^{1-3}$, a and n are as previously defined. Although their preparation is effected by a method which does not involve the use of catalyst quenching agents, they maintain substantially more stable viscosities than those prepared by using other acids as catalysts. They typically decrease in viscosity by 25% or less when stored for 3 days at 100 °C. Such polyalkoxysilyl-terminated silicones are another aspect of the invention.

The conversion of amine salts of formic acid to non-acidic, harmless products under the conditions of the present invention has been established by numerous model reactions. For example, di-n-butylammonium formiate and methyltrimethoxysilane react to form di-n-butylformamide, methanol and dimethyltetramethoxydisiloxane; the reaction is complete after 6 days at 60 ° C, while the corresponding reaction with acetic acid does not proceed measurably at temperatures below 100 ° C. Tertiary amine salts of formic acid form methanol, dimethyltetramethoxydisiloxane, methyl formiate and a trialkylamine under similar conditions.

The reaction of dimethylamine with formic acid at 95 ° C is known to produce dimethylformamide as the major product after 3 hours. Similarly, formic acid reacts with methyltrimethoxysilane at room temperature to produce methyl formiate, methanol and dimethyltetramethoxydisiloxane, while the corresponding reaction with acetic acid requires a temperature of 100 ° C.

Finally, a model silane of the formula

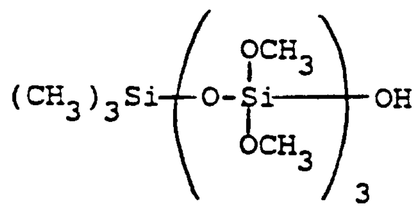

was found by gas chromatographic analysis to react with excess methyltrimethoxysilane in the presence of a catalytic amount of di-n-butylammonium formiate to produce, after one hour at 70 ° C, various condensed silicones including 77% of the theoretical amount of the expected product of the formula

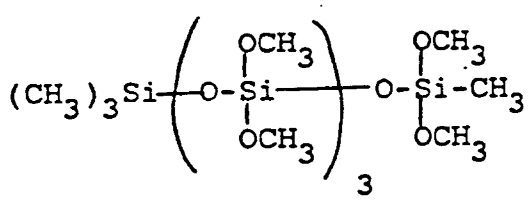.

Also obtained, in 86% of the theoretical amount, was the expected N,N-di-n-butylformamide.

The preparation of the polyalkoxysilyl-terminated silicones of this invention is illustrated by the following examples. All parts in the examples herein are by weight. Viscosities are Brookfield viscosities at 25 ° C. Formic acid was undiluted unless otherwise specified.

Examples 1-2

Mixtures of 100 g of two different silanol-terminated polydimethylsiloxanes, 2 g of methyltrimethoxysilane, 0.3 g (2.33 mmol.) of di-n-butylamine and 0.003 g (0.57 mmol.) of 88% aqueous formic acid were heated at 70-80 ° C under nitrogen, with stirring, for 1 hour and cooled. The titanium coupling test showed that the reaction was essentially complete.

The products were heat-aged in a closed vessel for 3 days at 100 ° C, with Brookfield viscosity measurements being made at one-day intervals. The results are given in Table I, in comparison with the following controls:

Control A - a similar product prepared using 0.05 g (0.83 mmol.) of acetic acid.

Control B - a similar product prepared using 0.05 g of acetic acid, with 1 g of hexamethyldisilazane added as a quenching agent after 1 hour of reaction.

TABLE I

| | Example 1 | Example 2 | Control A | Control B |
|---|---|---|---|---|
| Viscosity, dPa•s (poises) | | | | |
| Before endcapping | 1840 | 245 | 1840 | 1840 |
| After endcapping | | | | |
| Immediately | 2120 | 320 | 3680 | 3080 |
| 1 day | 1700 | 310 | 140 | 2700 |
| 2 days | 1640 | 310 | 40 | 2600 |
| 3 days | 1580 | 310 | 24 | 2300 |
| Viscosity loss, % | 25 | 3 | 99 | 25 |

The listings in Table I show that the method of the present invention is effective to produce an endcapped polymer essentially equivalent to that produced by the use of acetic acid and hexamethyldisilazane as a quenching agent. It also shows the pronounced viscosity loss resulting from the use of acetic acid without quenching agent.

Examples 3-7

Mixtures of 100 parts of a silanol-terminated polydimethylsiloxane having a viscosity of 280 dPa•s (poises), 1.75 parts of methyltrimethoxysilane and 0.05 part of various preformed amine salts of formic acid were heated for 3 hours at 100°C under nitrogen, with stirring. The final viscosities of the endcapped products thus obtained are given in Table II.

TABLE II

| Example | Amine | Viscosity, dPa•s (poises) |
|---|---|---|
| 3 | Di-n-butylamine | 430 |
| 4 | Diisobutylamine | 400 |
| 5 | n-Octylamine | 340 |
| 6 | Triethylamine | 400 |
| 7 | Tri-n-butylamine | 600 |

Example 8

A mixture of 100 g of a silanol-terminated polydimethylsiloxane having a viscosity of 260 dPa•s (poises), 2 parts of methyltrimethoxysilane, 0.074 g (0.57 mmol.) of diisobutylamine and 0.026 g (0.57 mmol.) of formic acid was heated at 80°C in a nitrogen atmosphere, with stirring, for 1-½ hours. At the end of that time, the silicone was shown by silicon-29 nuclear magnetic resonance spectroscopy to be polymethoxysilyl-terminated; its viscosity was 325 dPa•s (poises) and remained stable after heat-aging in a closed vessel for 2 days at 100°C.

Example 9

A mixture of 100 parts of the silanol-terminated polydimethylsiloxane of Example 2, 2.25 parts of methyltrimethoxysilane and 0.01 part of the diisobutylamine salt of formic acid was heated at 100°C in a nitrogen atmosphere, with stirring, until endcapping was complete as shown by the titanium coupling test.

The polyalkoxysilyl-terminated silicones of this invention are useful as the reactive silicone constituents of RTV compositions. They may be used in any of such compositions known in the art which employ polyalkoxysilyl-terminated as opposed to silanol-terminated silicones.

A particularly advantageous area of application of the polyalkoxylsilyl-terminated silicones of this invention is in the preparation of scavenger-free RTV compositions containing organotin complexes as curing catalysts in combination with various adhesion promoters. Accordingly, another aspect of the

invention is enoxysilane-free room temperature vulcanizable polydiorganosiloxane compositions comprising:

(A) at least one polyalkoxy-terminated polydiorganosiloxane of this invention, and

(B) a catalytic amount of an organotin complex of the formula

(III) 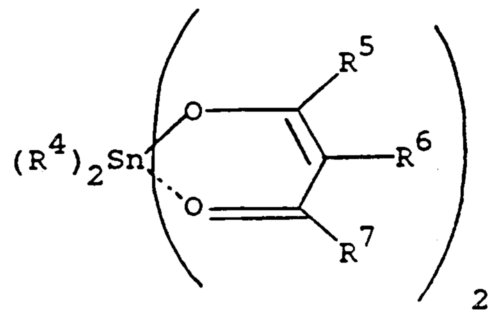 ,

wherein $R^4$ is an unsubstituted or substituted hydrocarbon radical containing from 1 to 18 carbon atoms and each of $R^5$, $R^6$ and $R^7$ is independently hydrogen, $R^4$, $Si(R^4)_3$, acyl or nitrile.

RTV compositions comprising components A and B, while being useful for many purposes, are sometimes deficient in adhesion to aluminum and steel surfaces. In a preferred aspect of the invention, said compositions also contain, as an adhesion promoter, (C) an effective amount of at least one compound selected from the group consisting of N-trialkoxysilylalkyl-substituted amides and imides, N-mono-(trialkoxysilylalkyl)-substituted ureas, N,N'-bis(trialkoxysilylalkyl)-substituted ureas, trialkoxysilylalkyl isocyanurates and mono-(N-trialkoxysilylalkyl)alkylenediamines, or a combination thereof with (D) a cyanoalkyltrialkoxysilane; said adhesion promoter and any reaction products thereof being the only silicon-nitrogen compounds in said composition.

In the organotin complex which is component B in the RTV compositions of this invention, the $R^4$ radicals may be substituted or unsubstituted; they are usually unsubstituted. Alkyl radicals, especially those containing 2-8 carbon atoms, are preferred, with n-butyl radicals being most preferred.

The complex portion of component B is derived from a diketone of the formula

(IV) 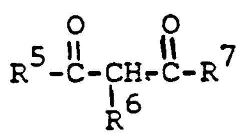 .

The $R^5$ and $R^7$ radicals therein are most often alkyl radicals, especially methyl, and $R^6$ is usually hydrogen. Thus, the preferred diketone is acetylacetone. Organotin complexes of this type and RTV compositions employing them as catalysts are disclosed in the aforementioned U.S. Patent 4,517,337.

Numerous organosilyl compounds useful as RTV adhesion promoters are known in the art; reference is made, for example, to U.S. Patents 3,888,815, 4,472,590 and 4,483,973. In its broadest sense, the present invention includes the use of any of such compounds. However, a limited selection of such compounds is particularly advantageous by reason of providing an adhesion to unprimed aluminum surfaces greater than 35 millipascals with greater than 45% cohesive failure, as determined by the ASTM C794 adhesion-in-peel test procedure. It is these compounds, as defined hereinabove, that comprise component C. The preferred adhesion promoters are N-(3-triethoxysilylpropyl)urea, N,N'-bis(3-trimethoxysilylpropyl)urea, N-(3-triethoxysilylpropyl)-p-nitrobenzamide, tris(3-trimethoxysilylpropyl) isocyanurate, N-(3-trimethoxysilylpropyl)-maleimide and N-(3-trimethoxysilylpropyl)ethylenediamine.

Component B and, preferably, component C are present in the RTV compositions of this invention in effective proportions to serve as catalysts and adhesion promoters, respectively. In general, 0.1-10.0 parts by weight of component B and 0.1-5.0 parts of component C may be employed per 100 parts of component A.

Adhesion promotion is frequently optimized if component C is employed in combination with (D) a cyanoalkyltrialkoxysilane, most often 2-cyanoethyltrimethoxysilane (hereinafter "CETMS") or 3-cyanopropyltrimethoxysilane, which acts as a synergist therefor. When employed, component D is usually present in the amount of 0.1-5.0 parts per 100 parts of component A. Its presence is often particularly advantageous when component C is an amide, imide or amine.

The RTV compositions of the invention may also contain other constituents in common use in such compositions, including curing catalyst accelerators, scavengers, plasticizers, pigments and fillers. In particular, at least one of the following may be present, all proportions being per 100 parts of component A:

(E) 0.05-5.0 parts of a diketone of formula IV;

(F) 0.01-10.0 parts of at least one polyalkoxysilane of formula I;

(G) 1-50 parts of a plasticizer;

(H) 5-700 parts of at least one filler; and

(J) 0.1-5.0 parts of an amine or guanidine as a curing accelerator.

Components E and F are often particularly preferred other constituents. Their presence contributes to the shelf stability of the RTV composition in the absence of moisture and its rapidity of cure in the presence of moisture.

The presence of component G is also frequently preferred. Suitable plasticizers useful as component G include trialkylsilyl-terminated polydiorganosiloxanes of the formula

(V) 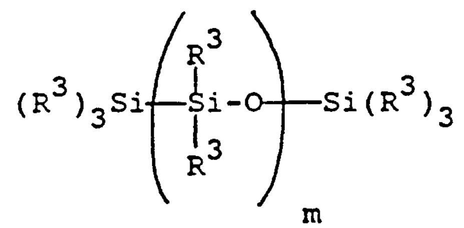 ,

wherein $R^3$ is as previously defined and m is in the range of 25-5000.

The presence or absence of component H, the filler, will depend to some extent on the intended use of the RTV composition. When the composition is to be used as a construction sealant or caulking compound, relatively large proportions of filler may be employed. For other uses, minor proportions of filler or no filler may be advisable. Suitable fillers include reinforcing materials such as silica aerogel, fumed silica, precipitated silica, glass fibers, titanium dioxide, zirconium silicate, iron oxide, calcium carbonate, diatomaceous earth and carbon black, and extending materials such as ground quartz and polyvinyl chloride, as well as mixtures thereof. It is frequently advantageous to pretreat a silica filler with an activating agent such as octamethylcyclotetrasiloxane.

Various amines and guanidines, optionally alkoxysilyl-substituted, may be used as curing accelerators (component J). Suitable accelerators are disclosed in the aforementioned U.S. Patent 4,517,337. An advantage of the present invention, however, is that such accelerators are generally not required.

The preparation and properties of RTV compositions of the present invention is illustrated by the following examples. All compositions were prepared by conventional high-shear mixing techniques in a nitrogen atmosphere, under the equivalent of "dry box" conditions. Tack-free times (hereinafter "TFT") and other properties were determined by art-recognized tent methods; those expressed in metric units were calculated from English units.

Example 10

An RTV composition was prepared from 100 parts of the polyalkoxysilyl-terminated silicone of Example 8, 0.68 part of methyltrimethoxysilane, 16 parts of octamethylcyclotetrasiloxane-treated fumed silica and 23 parts of a trimethylsilyl-terminated polydimethylsiloxane oil having a Brookfield viscosity of 1 dPa•s (poise) (corresponding to formula V wherein $R^2$ is methyl and n is about 80). There were subsequently added 0.92 part of dibutyltin bis(acetylacetonate), 0.35 part of acetylacetone and 1.05 parts of methyltrimethoxysilane. TFT values were determined before and after heat aging for 48 hours at 100 °C. Other physical properties were determined after 14 days of cure at 50% relative humidity, immediately and after a similar heat aging period. The results are given in Table III.

TABLE III

| | Before aging | After aging |
|---|---|---|
| TFT, min. | 45 | 30 |
| Shore A hardness | 22 | 19 |
| Tensile strength, millipascals | 1540 | 251 |
| Elongation at break, % | 337 | 373 |

The tabulated results show the substantial shelf stability of the RTV compositions of this invention.

Example 11

To the polymethoxysilyl-terminated silicone of Example 9 were added 0.30 part of dibutyltin bis-(acetylacetonate), 0.30 part of acetylacetone and 0.50 part of methyltrimethoxysilane. The TFT and yellowness index (YI) of the product were determined immediately after mixing and after various heat aging periods at 100°C. YI values were determined using a colorimeter. For visual comparison, a YI value on the order of 2-3 represents a material which is colorless to the human eye, while a value of 10 represents a material which is distinctly yellow.

The results are given in Table IV, in comparison with controls employing polymethoxysilyl-terminated silicones and other ingredients as in Example 9, except as follows:

Control A - the amine salt of formic acid was replaced by 0.30 part of di-n-butylamine.

Control B - the amine salt of formic acid was replaced by 0.30 part of di-n-butylamine and 0.05 part of acetic acid.

Control C - 2 parts of hexamethyldisilazane was added to Control B after endcapping was complete.

Control D - 0.30 part of diisobutylamine was substituted for the di-n-butylamine of Control C.

For all materials except control A, endcapping was complete after 1 hour at 100°C; in Control A, at least 12 hours was required.

The test results are given in Table IV.

TABLE IV

| | Ex. 11 | A | B | C | D |
|---|---|---|---|---|---|
| TFT, min.: | | | | | |
| Initial | 25 | 20 | 55 | 45 | 55 |
| 12 hours | 20 | 20 | 60 | 45 | 60 |
| 36 hours | 25 | 25 | 75 | 55 | 55 |
| 60 hours | 25 | 35 | 180 | 55 | 75 |
| 84 hours | 30 | 120 | * | 60 | 240 |
| YI: | | | | | |
| Initial | 0.9 | 1.4 | 1.3 | 3.4 | 1.2 |
| 12 hours | 1.0 | 3.6 | 7.0 | 6.5 | 2.6 |
| 36 hours | 0.9 | 4.5 | 9.2 | 7.5 | 3.7 |
| 60 hours | 0.8 | 5.6 | 11.0 | 9.3 | 4.8 |
| 84 hours | 0.8 | 8.9 | 25.0 | 15.5 | 7.8 |
| *Did not cure. | | | | | |

From the foregoing, it is apparent that the RTV compositions of the present invention are substantially more shelf stable than those of the controls, with respect both to TFT and YI.

Examples 12-18

RTV compositions were prepared by initially blending 100 parts of the polymethoxysilyl-terminated silicone of Example 8, 0.68 part of methyltrimethoxysilane, 16 parts of octamethylcyclotetrasiloxane-treated

fumed silica and 23 parts of the trimethylsilyl-terminated silicone oil of Example 10, and subsequently adding 0.42 part of dibutyltin bis(acetylacetonate), 0.35 part of acetylacetone, 0.35 part of methyltrimethoxysilane and various proportions of adhesion promoters, alone or in combination with CETMS. TFT values were determined initially and after 48 hours of heat aging at 100 °C. Adhesion-in-peel values on unprimed aluminum were determined according to ASTM test method C794 after 7 to 14 days of cure at 50% relative humidity, and are reported in millipascals.

The results are given in Table V, in comparison with a control in which no adhesion promoter was employed.

TABLE V

| Example | Adhesion promoter Identity | Adhesion promoter Parts | CETMS, parts | TFT Init. | TFT 48 hr. | Adhesion, millipascals | Cohesive failure, % |
|---|---|---|---|---|---|---|---|
| 12 | Tris(3-trimethoxysilyl-propyl) isocyanurate | 1.4 | --- | 45 | 45 | 195.8 | 89 |
| 13 | N-(3-trimethoxysilyl-propyl)urea | 0.7 | --- | 90 | 90 | 119.3 | 100 |
| 14 | N-(3-trimethoxysilyl-propyl)-p-nitrobenzamide | 0.7 | 1.0 | 40 | 45 | 110.3 | 47 |
| 15 | N,N'-bis(3-trimethoxysilyl-propyl)urea | 0.7 | --- | 25 | 30 | 149.6 | 100 |
| 16 | N-(3-trimethoxysilyl-propyl)maleimide | 0.7 | 1.0 | -- | -- | 35 | 50 |
| 17 | N-(3-trimethoxysilylpropyl)-ethylenediamine | 0.7 | 1.0 | -- | -- | 35 | 50 |
| Control | ---- | --- | --- | 45 | 45 | 35 | 0 |

It is apparent from the results in Table V that the RTV compositions of this invention, employing the specific adhesion promoters previously described, are comparable to the control in TFT in substantially superior in adhesion properties. Numerous other control examples employing a wide variety of commercially available adhesion promoters demonstrated adhesion values of less than 35 millipascals and cohesive

failure values of less than 50%.

The accelerated aging results reported hereinabove appear to parallel closely the results obtained after prolonged room temperature storage. For example, the composition of Example 12 cured satisfactorily after 6 months at room temperature.

## Claims

1. A method for preparing a polyalkoxysilyl-terminated polydiorganosiloxane which comprises effecting reaction between the components of a mixture comprising at least one silanol-terminated polydiorganosiloxane and an amount effective for endcapping thereof of the formula

   (I) $(R^1)_aSi(OR^2)_{4-a}$ ,

   wherein $R^1$ is an unsubstituted or substituted hydrocarbon radical containing from 1 to 13 carbon atoms, $R^2$ is an alkyl, alkoxyalkyl, acylalkyl, acyloxyalkyl or cyanoalkyl radical containing fom 1 to 8 carbon atoms or an aralkyl radical containing from 7 to 14 carbon atoms, and a is 0 or 1; said reaction being conducted in the presence of a catalytic amount of an acidic amine salt which, when dissolved in water in substancially pure form, yields a solution with a pH below 7, said salt being capable of decomposing to substantially inert products, and enoxysilanes.

2. A method according to claim 1 wherein the acidic salt is an amine salt of formic acid.

3. A method according to claim 2 wherein the silanol-terminated polydiorganosiloxane has the formula

   (II) 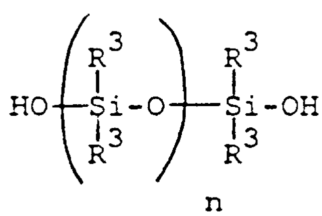 ,

   wherein each $R^3$ is independently an unsubstituted or substituted hydrocarbon radical containing 1-13 carbon atoms and n is in the range of 5-5000.

4. A method according to claim 3 wherein the amine is a dialkylamine.

5. A method according to claim 4 wherein each $R^3$ is methyl and the polyalkoxysilane is methyltrimethoxysilane and is employed in the amount of 0.5-10.0 parts by weight per 100 parts of silanol-terminated polydiorganosiloxane.

6. A method according to claim 5 wherein the amine salt of formic acid is employed in the amount of 0.005-3.0 parts by weight per 100 parts of silanol-terminated polydiorganosiloxane.

7. A method according to claim 6 wherein the amine is di-n-butylamine.

8. A method according to claim 6 wherein the amine is diisobutylamine.

9. A method according to claim 6 wherein the amine salt and methyltrimethoxysilane are employed in the amounts of 0.05-0.30 and 0.5-3.0 parts, respectively, per 100 parts of silanol-terminated polydiorganosiloxane.

10. A method according to claim 5 wherein the amine salt of formic acid is prepared in situ in said mixture by the addition of formic acid and an amine.

11. A method according to claim 10 wherein the amine and formic acid are employed in the amounts of 0.001-1.0 part and 0.001-0.1 part by weight, respectively, per 100 parts of silanol-terminated polydiorganosiloxane.

**12.** A polyalkoxysilyl-terminated polydiorganosiloxane prepared by the method of claim 1.

**13.** A polyalkoxysilyl-terminated polydiorganosiloxane prepared by the method of claim 5.

**14.** An enoxysilane-free room temperature vulcanizable polydiorganosiloxane composition comprising:
(A) at least one polyalkoxy-terminated polydiorganosiloxane produced according to the method of claim 1, and
(B) a catalytic amount of an organotin complex of the formula

(III) 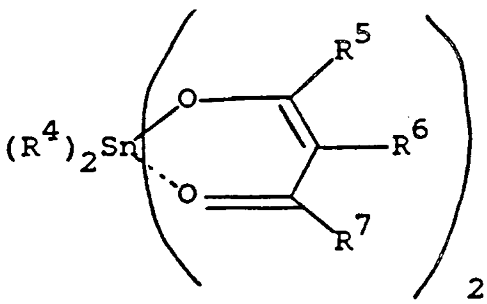 ,

wherein $R^4$ is an unsubstituted or substituted hydrocarbon radical containing from 1 to 18 carbon atoms and each of $R^5$, $R^6$ and $R^7$ is independently hydrogen, $R^4$, $Si(R^4)_3$, acyl or nitrile.

**15.** A composition according to claim 14 which also contains, as an adhesion promoter, (C) an effective amount of at least one compound selected from N-trialkoxysilylalkyl-substituted amides and imides, N-mono(trialkoxysilylalkyl)-substituted ureas, N,N'-bis(trialkoxysilylalkyl)-substituted ureas, trialkoxysilylalkyl isocyanurates and mono-(N-trialkoxysilylalkyl)alkylenediamines, or a combination thereof with (D) a cyanoalkyltrialkoxysilane, said adhesion promoter and any reaction products thereof being the only silicon-nitrogen compounds in said composition.

**16.** A composition according to claim 15 wherein component B is dibutyltin bis(acetylacetonate) and is employed in the amount of 0.1-10.0 parts by weight per 100 parts of component A.

**17.** A composition according to claim 16 wherein component C is employed in the amount of 0.1-5.0 parts by weight per 100 parts of component A.

**18.** A composition according to claim 17 wherein component C is tris(3-trimethoxysilylpropyl) isocyanurate, N-(3-trimethoxysilylpropyl)urea or N,N'-bis(3-trimethoxysilylpropyl)urea.

**19.** A composition according to claim 17 wherein component C is N-(3-trimethoxysilylpropyl)-p-nitrobenzamide, N-(3-trimethoxysilylpropyl)maleimide or N-(3-trimethoxysilylpropyl)ethylenediamine, and component D is 2-cyanoethyltrimethoxysilane and is employed in the amount of 0.1-5.0 parts by weight per 100 parts of component A.

**20.** A composition according to claim 17 which also comprises at least one of the following, all proportions being per 100 parts of component A:
(E) 0.05-5.0 parts of a diketone of the formula

(IV) 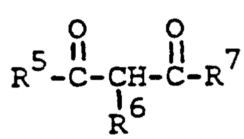 ;

(F) 0.01-10.0 parts of at least one polyalkoxysilane of formula I;

(G) 1-50 parts of a plasticizer comprising a trialkylsilyl-terminated polydiorganosiloxane of the formula

(V) 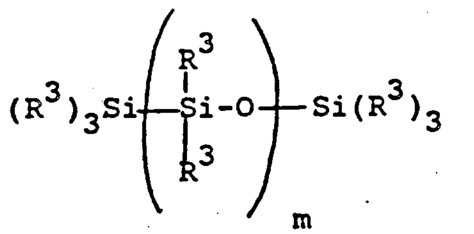 ,

wherein $R^3$ is an unsubstituted or substituted hydrocarbon radical containing 1-13 carbon atoms and m is in the range of 25-5000;

(H) 5-700 parts of at least one filler; and

(J) 0.1-5.0 parts of an amine or guanidine as a curing accelerator.

**21.** A composition according to claim 20 which includes components E, F and G.

**22.** A composition according to claim 20 wherein $R^{1-3}$, $R^5$ and $R^7$ are each methyl, $R^4$ is n-butyl, $R^6$ is hydrogen and a is 1.

**Patentansprüche**

**1.** Verfahren zum Herstellen eines Polyalkoxysilyl-Endgruppen aufweisenden Polydiorganosiloxans, umfassend die Umsetzung zwischen den Komponenten einer Mischung, umfassend mindestens ein Silanol-Endgruppen aufweisendes Polydiorganosiloxan und eine für die Bildung von Endgruppen wirksame Menge einer Verbindung der Formel

$(R^1)_aSi(OR^2)_{4-a}$ (I)

worin $R^1$ ein unsubstituierter oder substituierter Kohlenwasserstoffrest ist, der von 1 bis 13 Kohlenstoffatome enthält, $R^2$ ein Alkyl-, Alkoxyalkyl-, Acylalkyl-, Acyloxyalkyl- oder Cyanalkylrest ist, der von 1 bis 8 Kohlenstoffatome enthält, oder ein Aralkylrest, der von 7 bis 14 Kohlenstoffatome enthält und a 0 oder 1 ist, wobei diese Umsetzung in Gegenwart einer katalytischen Menge eines sauren Aminsalzes, das in Wasser in im wesentlichen reiner Form gelöst, eine Lösung mit einem pH unter 7 ergibt, wobei das Salz zum zersetzen in im wesentlichen inerte Produkte in der Lage ist, und von Enoxysilanen ausgeführt wird.

**2.** Verfahren nach Anspruch 1, worin das saure Salz eine Aminsalz von Ameisensäure ist.

**3.** Verfahren nach Anspruch 2, worin das Silanol-Endgruppen aufweisende Polydiorganosiloxan die Formel hat

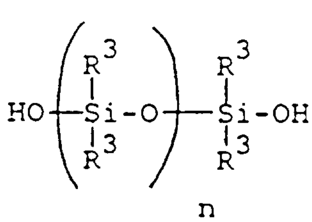 , (II)

worin jedes $R^3$ unabhängig ein unsubstituierter oder substituierter Kohlenwasserstoffrest ist, der 1 bis 13 Kohlenstoffatome enthält und n im Bereich von 5 bis 5000 liegt.

4. Verfahren nach Anspruch 3, worin das Amin Dialkylamin ist.

5. Verfahren nach Anspruch 4, worin jedes $R^3$ Methyl ist und das Polyalkoxysilan Methyltrimethoxysilan ist, und es in einer Menge von 0,5 bis 10,0 Gewichtsteilen auf 100 Teile des Silanol-Endgruppen aufweisenden Polydiorganosiloxans eingesetzt wird.

6. Verfahren nach Anspruch 5, worin das Aminsalz der Ameisensäure in einer Menge von 0,005 bis 3,0 Gewichtsteilen auf 100 Teile des Silanol-Endgruppen aufweisenden Polydiorganosiloxans eingesetzt wird.

7. Verfahren nach Anspruch 6, worin das Amin Di-n-butylamin ist.

8. Verfahren nach Anspruch 6, worin das Amin Diisobutylamin ist.

9. Verfahren nach Anspruch 6, worin das Aminsalz und Methyltrimethoxysilan in Mengen von 0,05 bis 0,30 bzw. 0,5 bis 3,0 Teile auf 100 Teile des Silanol-Endgruppen aufweisenden Polydiorganosiloxans eingesetzt werden.

10. Verfahren nach Anspruch 5, worin das Aminsalz der Ameisensäure in situ in der Mischung hergestellt wird, indem man Ameisensäure und ein Amin hinzugibt.

11. Verfahren nach Anspruch 10, worin das Amin und Ameisensäure in Mengen von 0,001 bis 1,0 bzw. 0,001 bis 0,1 Gewichtsteile auf 100 Teile des Silanol-Endgruppen aufweisenden Polydiorganosiloxans eingesetzt werden.

12. Polyalkoxysilyl-Endgruppen aufweisendes Polydiorganosiloxan, hergestellt nach dem Verfahren von Anspruch 1.

13. Polyalkoxysilyl-Endgruppen aufweisendes Polydiorganosiloxan, hergestellt nach dem Verfahren von Anspruch 5.

14. Enoxysilan-freie bei Raumtemperatur vulkanisierbare Polydiorganosiloxan-Zusammensetzung, umfassend:

(A) mindestens ein Polyalkoxy-Endgruppen aufweisendes Polydiorganosiloxan, hergestellt gemäß dem Verfahren von Anspruch 1 und

(B) eine katalytische Menge eines zinnorganischen Komplexes der Formel

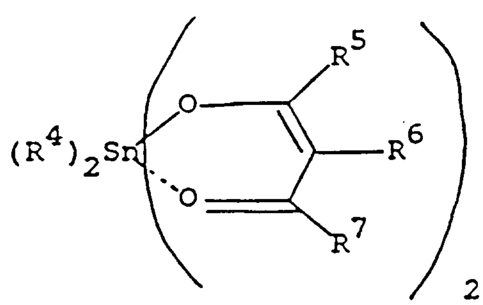 , (III)

worin $R^4$ ein unsubstituierter oder substituierter Kohlenwasserstoffrest ist, der von 1 bis 18 Kohlenstoffatome enthält, und jedes von $R^5$, $R^6$ und $R^7$ unabhängig Wasserstoff, $R^4$, $Si(R^4)_3$, Acyl oder Nitril ist.

15. Zusammensetzung nach Anspruch 14, die als einen Adhäsionsförderer auch (C) eine wirksame Menge mindestens einer Verbindung, ausgewählt aus N-Trialkoxysilylalkylsubstituierten Amiden und Imiden, N-Mono(trialkoxysilylalkyl)-substituierten Harnstoffen, N, N'-Bis(trialkoxysilylalkyl)-substituierten Harnstoffen, Trialkoxysilylalkylisocyanuraten und Mono-(N-trialkoxysilylalkyl)alkylendiaminen oder eine Kombination davon mit (D), einem Cyanalkyltrialkoxysilan, enthält, wobei dieser Adhäsionsförderer und

irgendein Reaktionsprodukt davon die einzigen Silicium-Stickstoff-Verbindungen in der Zusammensetzung sind.

**16.** Zusammensetzung nach Anspruch 15, worin die Komponente B Dibutylzinn-bis(acetylacetonat) ist, und sie in einer Menge von 0,1 bis 10 Gewichtsteilen auf 100 Teile der Komponente A eingesetzt ist.

**17.** Zusammensetzung nach Anspruch 16, worin die Komponente C in der Menge von 0,1 bis 5,0 Gewichtsteile auf 100 Teile der Komponente A eingesetzt ist.

**18.** Zusammensetzung nach Anspruch 17, worin Komponente C Tris(3-trimethoxysilylpropyl)isocyanurat, N-(3-Trimethoxysilylpropyl)harnstoff oder N,N'-Bis(3-trimethoxysilylpropyl)harnstoff ist.

**19.** Zusammensetzung nach Anspruch 17, worin Komponente C N-(3-Trimethoxysilylpropyl)-p-nitrobenzamid, N-(3-Trimethoxysilylpropyl)maleimid oder N-(3-Trimethoxysilylpropyl)ethylendiamin ist und Komponente D 2-Cyanethyltrimethoxysilan ist und in einer Menge von 0,1 bis 5 Gewichtsteilen auf 100 Teile der Komponente A eingesetzt ist.

**20.** Zusammensetzung nach Anspruch 17, die auch mindestens einen der folgenden Bestandteile umfaßt, wobei sich alle Anteile auf 100 Teile der Komponente A beziehen:

(E) 0,05 bis 5,0 Teile eines Diketons der Formel

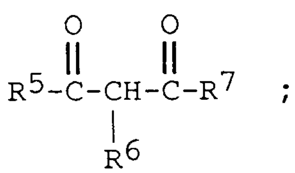

(IV)

(F) 0,01 bis 10,0 Teile mindestens eines Polyalkoxysilans der Formel I;

(G) 1 bis 50 Teile eines Weichmachers, umfassend ein Trialkylsilyl-Endgruppen aufweisendes Polydiorganosiloxan der Formel

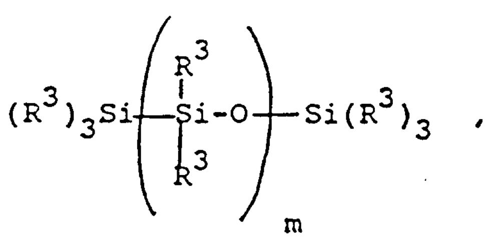

(V)

worin $R^3$ ein unsubstituierter oder substituierter Kohlenwasserstoffrest ist, der 1 bis 13 Kohlenstoffatome enthält, und m im Bereich von 25 bis 5000 liegt;

(H) 5 bis 700 Teile mindestens eines Füllstoffes und

(J) 0,1 bis 5,0 Teile eines Amins oder Guanidins als einem Härtungsbeschleuniger.

**21.** Zusammensetzung nach Anspruch 20, die die Komponenten E, F und G einschließt.

**22.** Zusammensetzung nach Anspruch 20, worin $R^{1-3}$, $R^5$ und $R^7$ jeweils Methyl sind, $R^4$ n-Butyl, $R^6$ Wasserstoff und a 1 ist.

## Revendications

**1.** Procédé de préparation d'un polydiorganosiloxane coiffé de groupes polyalcoxysilyle, consistant à faire réagir les composants d'un mélange contenant au moins un polydiorganosiloxane coiffé de groupes silanol et une quantité, efficace pour le coiffage de celui-ci, d'un composé de formule

(I) $(R^1)_aSi(OR^2)_{4-a}$

dans laquelle $R^1$ représente un radical hydrocarboné substitué ou non substitué comportant de 1 à 13 atomes de carbones, $R^2$ représente un radical alkyle, alcoxyalkyle, acylalkyle, acyloxyalkyle ou cyanoalkyle comportant de 1 à 8 atomes de carbone ou un radical aralkyle contenant de 7 à 14 atomes de carbone, et a est égal à 0 ou 1, ladite réaction étant réalisée en présence d'une quantité catalytique d'un sel acide d'amine qui, lorsqu'il est dissous dans l'eau sous une forme quasi pure, donne une solution ayant un pH inférieur à 7, ledit sel étant capable de se décomposer pour donner des produits quasi inertes, et en absence d'énoxysilanes.

**2.** Procédé conforme à la revendication 1 dans lequel le sel acide est un formiate d'amine.

**3.** Procédé conforme à la revendication 2 dans lequel le polydiorganodiloxane coiffé de groupes silanol a la formule

(II)

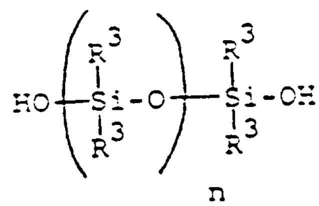

dans laquelle chaque $R^3$ représente indépendemment un radical hydrocarboné substitué ou non substitué comportant de 1 à 13 atomes de carbone et n est compris entre 5 et 5000.

**4.** Procédé conforme à la revendication 3 dans lequel l'amine est une dialkylamine.

**5.** Procédé conforme à la revendication 4 dans lequel chaque $R^3$ représente un groupe méthyle et le polyalcoxysilane est un méthyltriméthoxysilane et est utilisé à raison de 0,5 - 10,0 parties en poids pour 100 parties de polydiorganosiloxane coiffé de groupes silanols.

**6.** Procédé conforme à la revendication 5 dans lequel le formiate d'amine est utilisé à raison de 0,005 - 3,0 parties en poids pour 100 parties de polydiorganosiloxane coiffé de groupes silanol.

**7.** Procédé conforme à la revendication 6 dans lequel l'amine est la di-n-butylamine.

**8.** Procédé conforme à la revendication 6 dans lequel l'amine est la diisobutylamine.

**9.** Procédé conforme à la revendication 6 dans lequel le sel d'amine et le méthyltriméthoxysilane sont utilisés respectivement à raison de 0,05 à 0,30 parties et de 0,5 à 3,0 parties pour 100 parties de polydiorganosiloxane.

**10.** Procédé conforme à la revendication 5 dans lequel le formiate d'amine est préparé *in situ* dans ledit mélange par addition d'acide formique et d'une amine.

**11.** Procédé conforme à la revendication 10 dans lequel l'amine et l'acide formique sont utilisés respectivement à raison de 0,001 à 1,0 parties en poids et de 0,001 à 0,1 parties en poids pour 100 parties de polydiorganosiloxane.

**12.** Polydiorganosiloxane coiffé de groupes polyalcoxysilyle préparé selon le procédé de la revendication 1.

**13.** Polydiorganosiloxane coiffé de groupes polyalcoxysilyle préparé selon le procédé de la revendication 5.

**14.** Composition de polydiorganosiloxane vulcanisable à température ambiante et exempte d'énoxysilane, contenant :

(A) au moins un polydiorganosiloxane coiffé de groupes polyalcoxysilyle préparé selon le procédé conforme à la revendication 1, et
(B) d'une quantité catalytique d'un complexe organo-stannique de formule

(III) 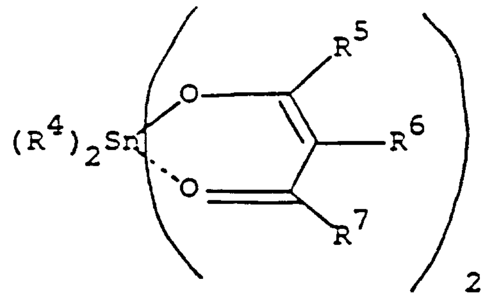

dans laquelle $R^4$ représente un radical hydrocarboné substitué ou non substitué comportant de 1 à 18 atomes de carbone et chaque $R^5$, $R^6$ et $R^7$ représente indépendemment un atomes d'hydrogène, un groupe $R^4$, $Si(R^4)_3$, acyle ou nitrile.

**15.** Composition conforme à la revendication 14 contenant également, comme agent favorisant l'adhésion, (C) une quantité efficace d'au moins un composé choisi parmi les N-trialcoxysilylalkyl(-amides et -imides), les N-mono(trialcoxysilylalkyl)-urées , les N,N'-bis-(trialcoxysilylalkyl)-urées, les trialcoxysilylalkylisocyanurates et les mono-(N-trialcoxysilylalkyl)alkylènediamines, ou une combinaison de ceux-ci avec (D) un cyanoalkyltrialcoxysilane, ledit agent favorisant l'adhésion et tout produit de réaction de celui-ci étant les seuls composés de ladite composition qui contiennent à la fois des atomes de silicium et d'azote.

**16.** Composition conforme à la revendication 15 dans laquelle le composant B est le dibutyl-bis-(acétylacétonate) d'étain et employé à raison de 0,1 à 10,0 parties en poids pour 100 parties du composant A.

**17.** Composition conforme à la revendication 16 dans laquelle le composant C est utilisé à raison de 0,1 à 5,0 parties en poids pour 100 parties de composant A.

**18.** Composition conforme à la revendication 17 dans laquelle le composant C est le tris-(3-triméthoxysilylpropyl)-isocyanurate, la N-(3-triméthoxysilylpropyl)-urée ou la N,N'-bis-(3-triméthoxysilylpropyle)-urée.

**19.** Composition conforme à la revendication 17 dans laquelle le composant C est le N-(3-méthoxysilylpropyl)-p-nitrobenzamide, le N-(3-méthoxysilylpropyl)-maléimide ou la N-(3-méthoxysilylpropyl)-éthylènediamine, et le composant D est le 2-cyanoéthyltriméthoxysilane et est utilisé à raison de 0,1 à 5,0 parties en poids pour 100 parties de composant A.

**20.** Composition conforme à la revendication 17 contenant également au moins un des composants suivants, toutes les fractions étant données pour 100 parties de composant A :
(E) de 0,05 à 0,5 parties d'une dicétone de formule

(IV) 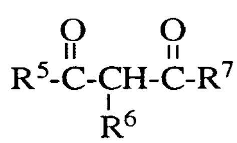

(F) de 0,01 à 10,0 parties d'au moins un polyalcoxysilane de formule (I),
(G) de 1 à 50 parties d'un plastifiant comprenant un polydiorganosiloxane coiffé de groupes trialkylsilyle de formule

(V) 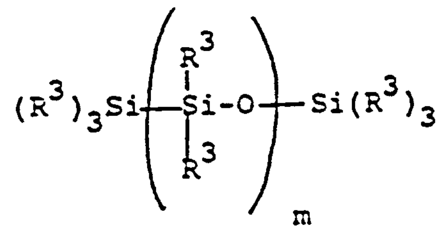

dans laquelle $R^3$ représente un radical hydrocarboné substitué ou non substitué comportant de 1 à 13 atomes de carbone et m est compris entre 25 et 5000,
(H) de 5 à 700 parties d'au moins une charge, et
(J) de 0,1 à 5,0 parties d'une amine ou de guanidine comme accélérateur de durcissement.

**21.** Composition conforme à la revendication 20 qui contient les composants E, F et G.

**22.** Composition conforme à la revendication 20 dans laquelle $R^1$ à $R^3$, $R^5$ et $R^7$ représentent chacun un groupe méthyle, $R^4$ un groupe n-butyle, $R^6$ un atome d'hydrogène et $\underline{a}$ est égal à 1.